# EUROPEAN PATENT APPLICATION

(11) **EP 3 771 090 A1**
(43) Date of publication of application: **27.01.2021**
(21) Application number: 19425059.3
(22) Date of filing: 22.07.2019
(51) Int. Cl.: H02S 20/00

(54) **APPARATUS FOR THE GENERATION OF ELECTRICAL ENERGY BY PHOTOVOLTAIC PANELS**

(71) Applicant: Upsolar Floating Srl, 31100 Treviso (IT)
(72) Inventor: Raniero, Cazzaniga, 56100 Pisa (IT)

(57) **Abstract**

An apparatus (1) for the generation of electrical energy by photovoltaic panels (2), which can be placed in a water basin (3), comprises: at least one floating structure (4); a plurality of photovoltaic panels (2), arranged in two or more rows (21), so that an upper face of the photovoltaic panels (2) receives a solar irradiation, the rows (21) being oriented along a longitudinal direction (L) ; for each row (21) of photovoltaic panels (2), a respective frame (5), on which the photovoltaic panels (2) are mounted; a plurality of longitudinal members (6) including three or more longitudinal members (6), connected to at least one said floating structure (4) and elongated along the longitudinal direction (L), in which the longitudinal members (6) of the plurality of longitudinal members (6) are spaced apart from each other, and in which the frame (5) of each row (21) of said plurality of rows (21) is connected to a corresponding pair of consecutive longitudinal members (6) of said plurality of longitudinal members (6).

## Description

The present invention relates to an apparatus for generating electrical energy through photovoltaic panels.

The field of this application is the generation of electricity through photovoltaic panels that can be placed in a water basin.

In this field apparatuses are known which include a plurality of floating elements, each of which supports a respective photovoltaic panel. Apparatuses of this type are described, for example, in patent documents CN207720056U and CN206033390U, IT1411531.

In these solutions the problem arises of guaranteeing the apparatus a good solidity, to prevent some floating elements from detaching from the others or toppling under the effect of wind or storm surges.

Furthermore, the problem arises of guaranteeing operators access to photovoltaic panels, to carry out ordinary and extraordinary maintenance; for this purpose, it is well known how to make walkways which, however, are not often very stable, due to the fluctuation of the floating elements, with the consequent risk of the operator falling.

Moreover, these apparatuses require complex mooring systems to be anchored to the bottom of the basin, whose maintenance, to be carried out underwater, is often difficult and dangerous for operators.

Therefore, in general, a solid and safe apparatus is required, which, at the same time, is simple to assemble and is light (so as to float).

The object of the present invention is to provide an apparatus for generating electrical energy and a method for making it that will overcome one or more of the aforementioned drawbacks of the known art.

This object is fully achieved by the apparatus for generating electrical energy by photovoltaic panels which are characterized by what is contained in the claims below.

The present description concerns an apparatus for the generation of electrical energy by photovoltaic panels that can be placed in a water basin (for example, a lake).

The apparatus includes at least one floating structure.

The apparatus includes a plurality of photovoltaic panels. The photovoltaic panels are arranged in two or more rows. Preferably, the photovoltaic panels are arranged according to a plurality of rows. The photovoltaic panels are arranged in such a way that an upper face of the photovoltaic panels receives solar radiation. Therefore, a plurality of panels is mounted on each row (in an embodiment, between 15 and 30 panels; for example, 24 panels). The rows are oriented in a longitudinal direction.

For each row of photovoltaic panels, the apparatus includes a respective frame. The frame is rigid. Preferably, the frame is made of (or includes) a metal, such as for example steel (preferably galvanized) or aluminum; the frame can also be made in (or include) plastic material. The photovoltaic panels are mounted on the frame.

The apparatus includes a plurality of longitudinal members. By longitudinal members we mean rigid elements of elongated shape, such as rods or beams or spars. The longitudinal members are connected to at least one floating structure. The longitudinal members are elongated along the longitudinal direction, therefore, the longitudinal members are oriented parallel to the rows of photovoltaic panels.

The longitudinal members are spaced apart in a transverse direction, perpendicular to said longitudinal direction. The plurality of longitudinal members includes at least three longitudinal members. Thus, the plurality of longitudinal members includes an initial longitudinal member, an end longitudinal member and at least one intermediate longitudinal member interposed between the initial longitudinal member and the end member.

The presence of the spars gives the apparatus high structural rigidity and solidity; at the same time, the apparatus remains light and easy to assemble.

A further advantage of having a rigid and compact structure is that it allows to use, for the cleaning of the panels, one or more mobile robots on the surfaces of the panels themselves. Moreover, the fact of having a compact structure simplifies and makes cooling and / or cleaning more efficient (by means of water or other liquid with which the panels are watered), since the panels are joined and close to each other.

The frame of each row of said plurality of rows is connected to a corresponding pair of consecutive (or adjacent) longitudinal members of said plurality of longitudinal members. Therefore, since the frame of each row is connected to a pair of consecutive longitudinal members, it means that each intermediate longitudinal member is connected to the frames of a first and a second row of adjacent photovoltaic panels.

Preferably, the apparatus comprises a plurality of floating structures. The floating structures of said plurality are elongated along the longitudinal direction. Preferably, each longitudinal member of said plurality of longitudinal members is connected to a respective floating structure of the plurality of floating structures. Therefore, preferably, each floating structure connected to an intermediate longitudinal member supports the frames of two consecutive rows of photovoltaic panels.

Preferably, each floating structure is positioned below the respective longitudinal member.

In an embodiment, each floating structure includes one or more tubular floating elements. Alternatively, the floating elements may have different shapes than the tubular one, such as, for example, parallelepiped.

In particular, in an embodiment, each floating structure includes a tubular floating element, on which a corresponding longitudinal member is positioned. In other embodiments, each floating structure includes a plurality of tubular floating elements, stacked in series one in front of the other along the longitudinal direction, in which the corresponding longitudinal member is positioned above the floating tubular elements of said plurality. Thus, each floating structure is expected to develop along a respective axis parallel to the longitudinal direction.

It is envisaged, at least in one embodiment, that said one or more tubular floating elements have a cylindrical shape, with a diameter of at least 0.25 m. Preferably, said one or more tubular floating elements have a diameter of at least 0.4 m.

In other embodiments, the floating elements may have sections other than the circular one, for example they may have a square or rectangular section.

It is also envisaged, in an embodiment, that said one or more tubular floating elements (and therefore, said longitudinal members) have a length, along the longitudinal direction, of less than or equal to 12 m.

The floating elements can be made of plastic (for example, high density polyethylene) or metal.

In an embodiment, each floating structure includes one or more annular coupling elements. The annular coupling elements surround said one or more floating elements of the floating structure. The annular coupling elements have, in a respective top portion, a coupling profile, to engage (or fit together) the corresponding longitudinal member. In an embodiment, the coupling profile is step-shaped.

It is envisaged that the annular coupling elements be made of metallic material, for example steel (galvanized) or aluminum.

In an embodiment, the frame is connected to the longitudinal member by means of the annular coupling element. In particular, the frame of each row of panels includes a plurality of elongated elements which are each hooked to a respective annular coupling element.

In an embodiment, each longitudinal member of said plurality of side members includes a concave area, to receive in coupling the coupling profile of the corresponding plurality of annular coupling elements. In particular, the longitudinal members are shaped like omega beams, including a first and a second vertical wall and a horizontal connecting wall, which connects the first and second vertical walls. The first and second vertical walls are parallel to each other. The first and second vertical walls and the horizontal connecting wall are parallel to the longitudinal direction. Furthermore, the horizontal connecting wall is parallel to the transverse direction. The coupling profile of the annular coupling element is received within the concave area of the side member and held there permanently. In fact, the coupling profile has a shape that corresponds to that of the concave area of the side member.

In an embodiment, the apparatus comprises a walkway that is passable by an operator, connected to one or more longitudinal members of the plurality of longitudinal members. The pedestrian walkway includes a walkable area for an operator to perform maintenance on the panels.

In an embodiment, the walkway is removably connected to (at least) one longitudinal member. In an embodiment, the apparatus comprises a plurality of walkways, each of which is connected to a respective longitudinal member.

In an embodiment, the walkway is interposed between a pair of rows of adjacent panels and firmly hooked to a longitudinal member (in an embodiment, in a removable manner). In this embodiment, the surface that is passable by the operator rises above the longitudinal member.

It is also envisaged, in an embodiment, that an upper surface of the longitudinal member itself be passable by the operator.

In an embodiment, the apparatus comprises a maintenance trolley, which can support one or two operators. At least one longitudinal member (preferably, each side member) provides a track to allow the sliding of the maintenance trolley along the longitudinal direction.

More particularly, the maintenance carriage includes at least one movable or sliding support element (for example, by means of wheels or skids) along a longitudinal member, and an elevated surface supported on the supporting element and defining a surface on which the operator can stand.

It is planned that the maintenance trolley can be used for extraordinary maintenance operations, while for inspections or routine maintenance the operator can walk on an upper surface of the side members or, at most, on a suitable walkway mounted on them.

In an embodiment, the frame of each row of photovoltaic panels is movably connected to the corresponding pair of consecutive longitudinal members, to allow an oscillation of the frame, with respect to each longitudinal member of said pair, around at least one respective axis oriented along the longitudinal direction. In this way, the apparatus can adapt its conformation to the wave motion of the basin.

In an embodiment, each frame is shaped like a tympanum and includes a first slope, a second slope and a tie-rod; preferably, it also includes a summit beam. Preferably, the top beam is elongated in the longitudinal direction, and the tie is elongated in the transverse direction. The first slope (defining a respective first inclined plane) has a first inclination with respect to the free surface of the basin; the second slope (defining a respective second inclined plane) has a second inclination with respect to the free surface of the basin. The second inclination is different from the first inclination. In an embodiment, the first slope and the second slope are symmetrical with respect to the top beam (therefore, they have the same inclination with respect to the free surface of the water, in opposite directions). Preferably, the first and the second inclination are lower than 30°; even more preferably, they are comprised between 5 and 10°.

In an embodiment, the first slope has a first base connected to a first longitudinal member of said pair; the second slope has a second base connected to a second longitudinal member of said pair; the first slope has a first summit and the second slope has a second summit, connected to the first summit of the first slope; the tie-rod extends between the first base and the second base. In an embodiment, the first slope has a length (in the transverse direction) equal to the first slope and, therefore, the frame defines, in a cross section, an isosceles triangle.

It is envisaged that the tie-rod can be interconnected to the first longitudinal member and to the second longitudinal member or, alternatively, to the first base and to the second base.

The tie can be rigid (like the elements of the frame that form the first and second slopes); for example, it can be made of metal or rigid plastic. Alternatively, the frame can be flexible; for example, it can be defined by a rope or a metal cable.

It should be noted that the frame defines a space, included between the first slope, the second slope and the tie-rod, in which objects such as, for example, inverters and / or storage batteries can be housed.

In one embodiment, each of said first and second slopes includes a plurality of elongated elements having a base end connected to the longitudinal member (or more particularly to the annular coupling element) and a summit end connected to the top of the frame beam. Since the top beam is, at least in an embodiment, at a greater vertical height with respect to the longitudinal members (and to the annular coupling elements), the elongated elements of the first and second sloping surfaces will be, at least in an embodiment, inclined with respect to the free surface of water.

It should be noted that the base ends of the elongated elements of the first (and second) sloping define the base of the first (and second) sloping.

A respective row of said plurality of rows of photovoltaic panels is mounted on the first slope. Therefore, preferably, the photovoltaic panels of each row have the same inclination with respect to the free surface of the water, inclination given by the first slope of the respective of the frame. Moreover, preferably, the first slopes of the frames of each row have the same inclination with respect to the free surface of the water and, consequently, all the panels of all the rows have the same inclination with respect to the free surface of the water (given by the inclination of the first slopes). In an embodiment, a neutral surface is mounted on the second slope; this option, in particular, is useful where the first slope is facing south (and therefore receives a high solar radiation) and the second slope is facing north.

In an embodiment, the top part supports an axis parallel to the longitudinal direction which allows a rotation of the frame of photovoltaic panels connected to it, thus realizing a horizontal axis tracking system.

In an embodiment, a further row of photovoltaic panels is mounted on the second slope. Thus, on each frame there is a row (on the first slope) and a further row (on the second slope). Thus, in one embodiment, the apparatus includes a plurality of side members, a plurality of frames mounted on a pair of consecutive longitudinal members, a plurality of rows of panels, in which each of said rows is mounted on the first slope of a corresponding frame of said plurality, and a plurality of further rows of panels, in which each of said further rows is mounted on the second slope of a corresponding frame of said plurality.

The gable structure of the frame gives the apparatus good qualities of lightness and, at the same time, compactness and sturdiness.

The apparatus includes a mooring structure. The mooring structure is configured to anchor the apparatus to a fixed point such as the bottom or a bank of the basin. It is envisaged that the mooring structure includes a plurality of mooring elements (for example cables) connected to an external perimeter of the apparatus and such that can be anchored to the bottom and / or to the basin edge. In particular, preferably, the mooring elements (or part of them) are connected to the initial longitudinal or the terminal longitudinal (end) member. It is also envisaged that the mooring elements (or part of them) be connected to the ends of the longitudinal members (initial, final, or intermediate). It is also envisaged that the apparatus includes a first transverse beam connected to a first end of the longitudinal members of the plurality of side members and / or a second transverse beam connected to a first end of the longitudinal members of the plurality of longitudinal members; in this way, the first transverse beam, the second transverse beam, the initial spar and the terminal longitudinal member define an external perimeter of the apparatus. The mooring elements can be connected, indifferently, to the first transverse beam, to the second transverse beam, to the initial longitudinal member and / or to the terminal longitudinal member. Thanks to the solidity of the apparatus, in fact, it can be moored with mooring elements attached to the external perimeter, which are easily accessible for maintenance (for example by small boats) and, unlike the mooring elements placed under water under the apparatus, do not require the operators to scuba dive under the apparatus itself.

The present description also provides a method for producing an apparatus for generating electrical energy by photovoltaic panels. The apparatus can be placed in a water basin.

The method comprises a phase for setting up at least one floating structure (preferably, a plurality of floating structures). For the characteristics of the floating structure (or floating structures), refer to what is described in relation to the apparatus.

The method comprises a phase for preparing a plurality of longitudinal members, including three or more longitudinal members. For the characteristics of the side members, refer to what is described in relation to the apparatus.

The method comprises a phase for connecting the longitudinal members of said plurality of side members to at least one said floating structure. Preferably, each longitudinal member is fixed to a respective floating structure of said plurality. In the connection phase, the longitudinal members of said plurality of longitudinal members are disposed oriented along a longitudinal direction and spaced between them along a transverse direction, perpendicular to said longitudinal direction. Preferably, in the connection phase, each longitudinal member is fixed above the respective floating structure.

In an embodiment, the method comprises a phase for preparing annular coupling elements which surround the floating structures. It is envisaged that the connection of the side members to the floating structures takes place by interlocking a coupling portion of the annular coupling elements with a corresponding concave portion of the longitudinal members.

The method comprises a phase for preparing a plurality of frames. For the characteristics of the frames, refer to what is described in relation to the apparatus. The method comprises a phase for connecting each frame to a corresponding pair of longitudinal members of said plurality of longitudinal members. Preferably, the frames are connected to the longitudinal members by means of a mobile connection (for example, they are pivoted), in order to be able to oscillate with respect to an axis oriented in the longitudinal direction, relative to the longitudinal members.

The method comprises a phase for preparing a plurality of photovoltaic panels. The method comprises a phase for assembling said plurality of photovoltaic panels according to a plurality of rows oriented along the longitudinal direction. In said assembly step, the photovoltaic panels of each row are mounted on a respective frame of said plurality of frames.

Therefore, the panels are mounted on the already assembled structure, in a simple and economical way. In an embodiment, the panels are fixed to the frame and / or to the longitudinal members (an upper side is fixed to a beam of the frame, a lower side is fixed to one of the longitudinal members).

In an embodiment, the method comprises a mooring phase of the apparatus. The mooring is carried out by connecting mooring elements between an external perimeter of the apparatus and a bank or a bottom of the basin. In particular, the mooring elements can be hooked to the longitudinal members (preferably, to the initial longitudinal member and to the initial longitudinal member of said plurality of longitudinal members arranged in succession).

In an embodiment, the method comprises a phase for preparing a walkway on which an operator can walk and connecting the gangway to one or more side members.

In an embodiment, the method comprises a phase for preparing a maintenance trolley, which can be driven by an operator, and a sliding coupling of the maintenance trolley on one or more longitudinal members. This and other characteristics will be better highlighted by the following description of a preferred embodiment, illustrated purely by way of a nonlimiting example in the accompanying drawings, in which:

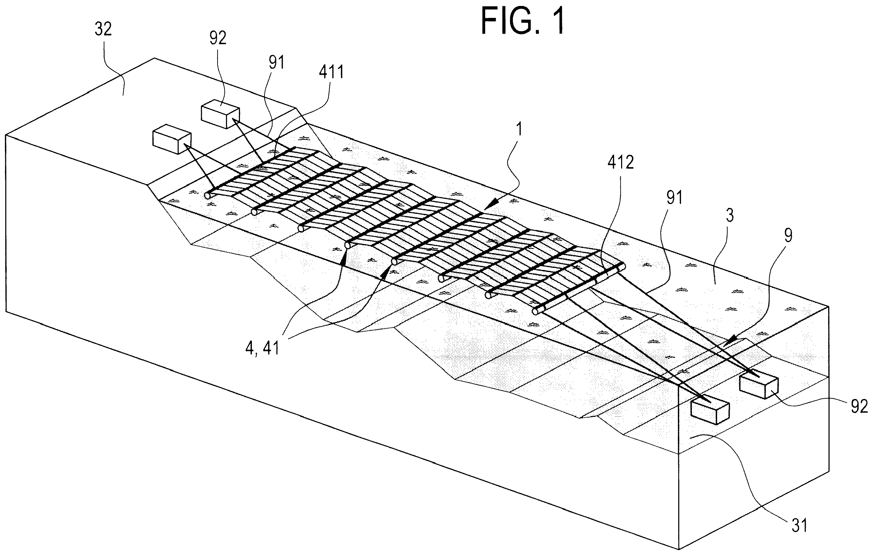

- figure 1 illustrates an apparatus for generating electrical energy according to the present description;

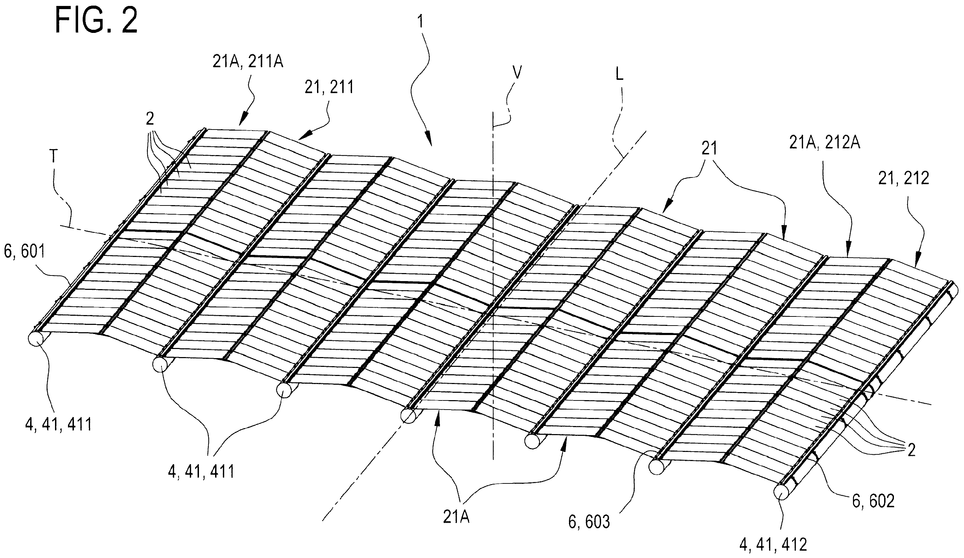

- figure 2 illustrates, from above, the apparatus of figure 1;

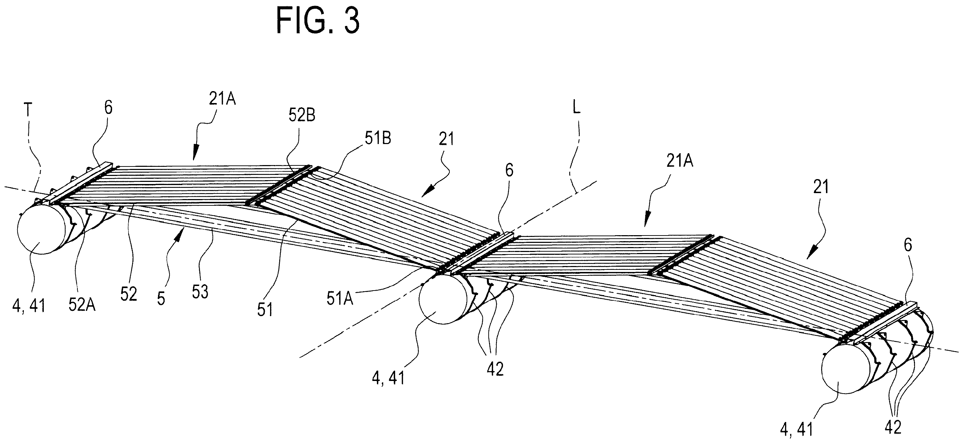

- figure 3 illustrates a detail of the apparatus of figure 1;

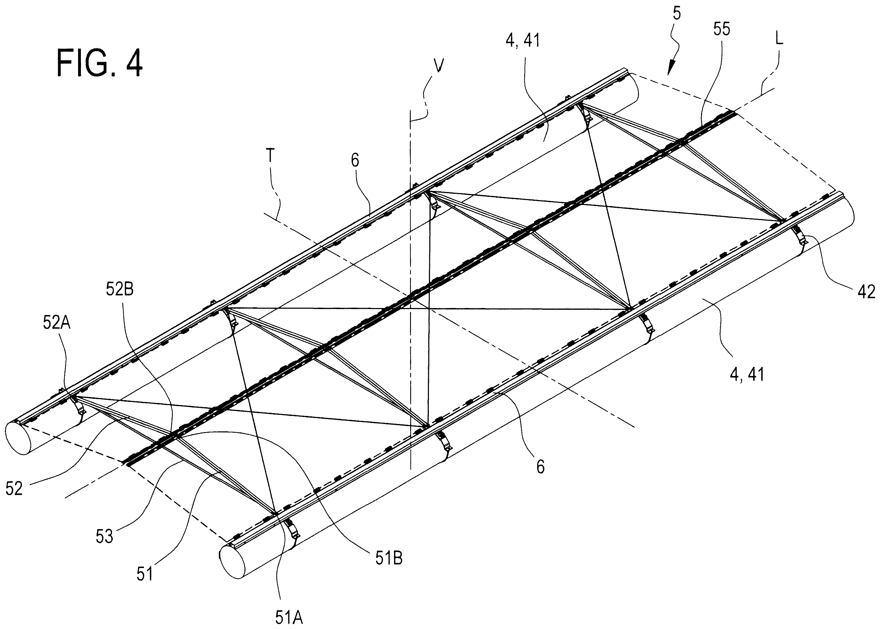

- figure 4 shows a frame and a corresponding pair of floating structures of the apparatus of figure 1, in a perspective view;

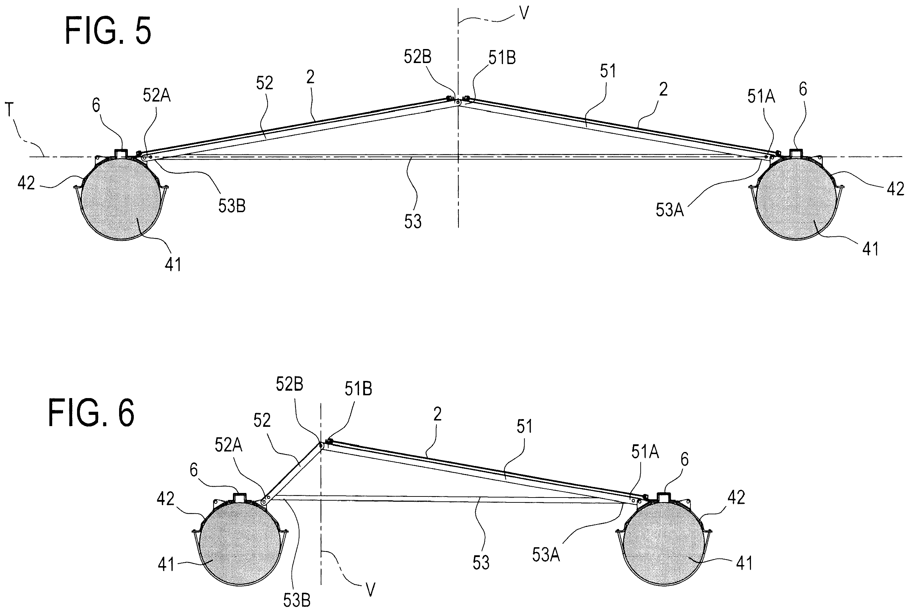

- figure 5 shows, in cross-section, a frame surmounted by panels and a corresponding pair of annular coupling elements of the apparatus of figure 1;
- figure 6 shows an alternative embodiment of the frame of figure 5;

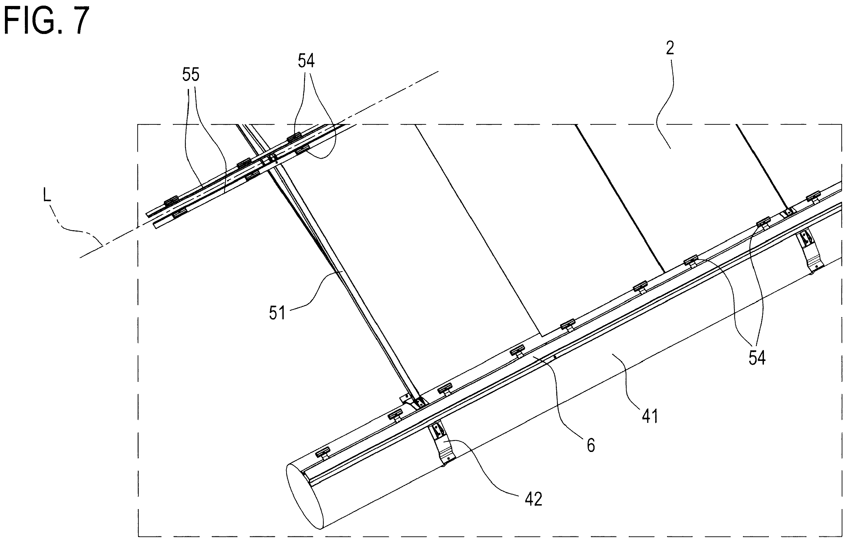

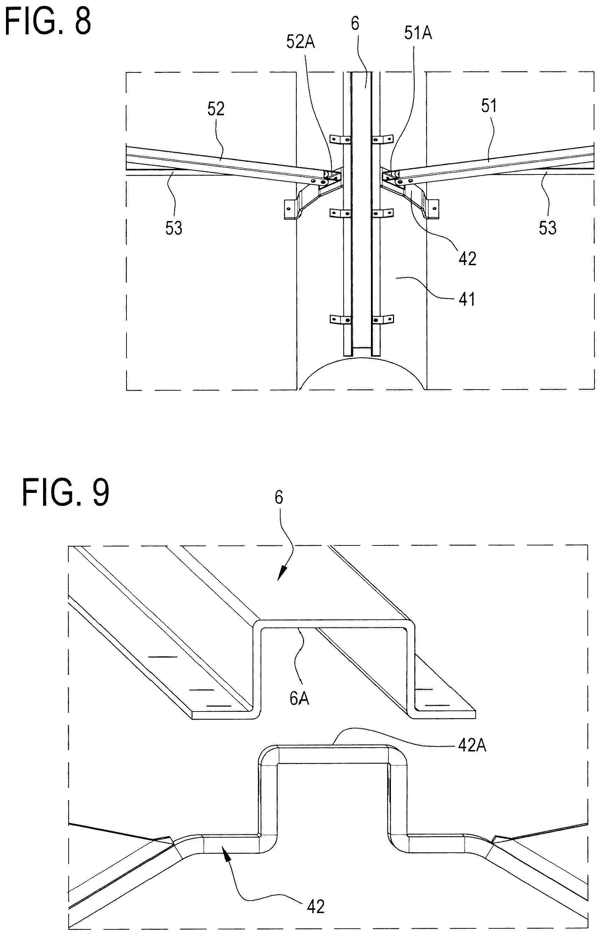

- figures 7 and 8 show details of a floating structure connected to a respective longitudinal member of the apparatus of figure 1;
- figure 9 shows a detail of a coupling profile of an annular coupling element and a corresponding longitudinal member of the apparatus of figure 1;

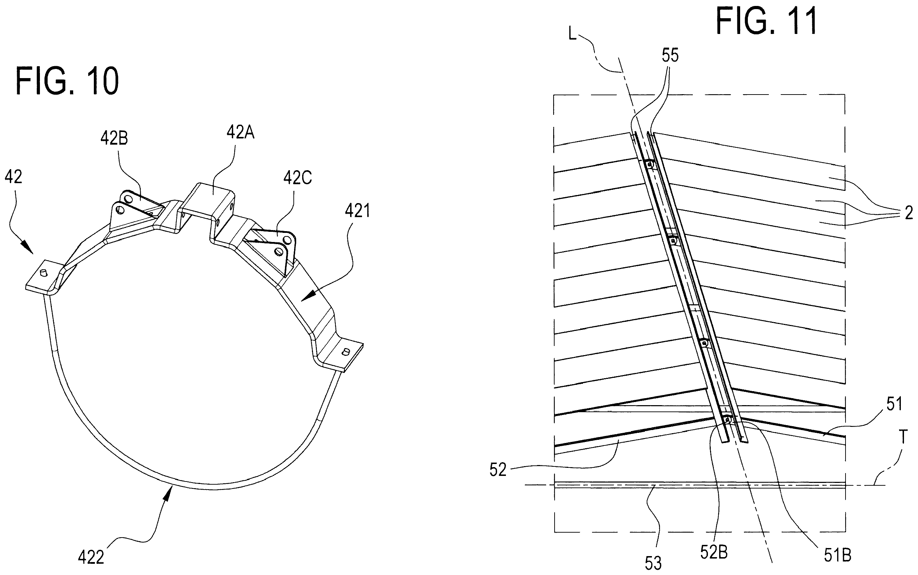

- figure 10 shows an annular coupling element of the apparatus of figure 1;

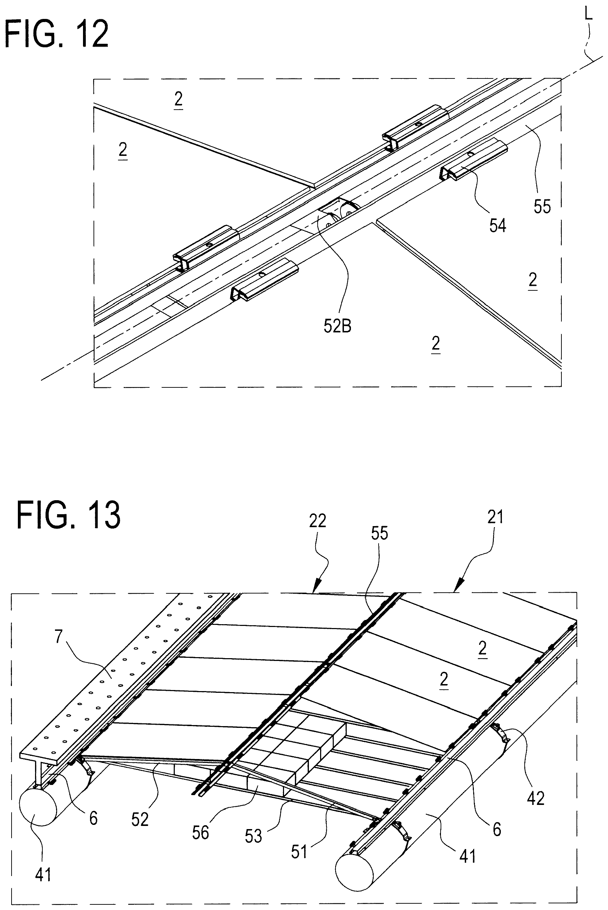

- figures 11 and 12 illustrate details showing a top of a frame and the panels attached to it of the apparatus in figure 1;
- figure 13 illustrates a detail of the apparatus of figure 1, according to a possible embodiment variant.

In the present description, 1 indicates an apparatus for generating electricity. The apparatus 1 can be placed in a water basin 3.

The apparatus 1 comprises a plurality of photovoltaic panels 2. The photovoltaic panels 2 are arranged according to a plurality of rows 21 and, at least in an embodiment, a plurality of further rows 21A. Each row 21 includes a plurality of panels 2 arranged in succession along a longitudinal direction L. Preferably, the longitudinal direction L is parallel to the free surface of the basin 3. Also each further row 21A includes a plurality of panels 2 arranged in succession along a longitudinal direction L. Thus, the rows 21 and the further rows 21A are oriented along the longitudinal direction L.

The rows 21 have a first inclination with respect to the free surface of the basin 3. The further rows 21A have a second inclination with respect to the free surface of the basin 3, said second inclination being, at least in a realization form, different from the first inclination.

The rows 21 of the plurality of rows 21 are arranged in succession along a transverse direction T, orthogonal to the longitudinal direction L (and parallel to the free surface of the basin 3). Thus, in the rows 21 one can identify an initial row 211, a terminal row 212, and a plurality of intermediate rows interposed between the initial row 211 and the end row 212.

A vertical direction V, parallel to the weight force (and therefore orthogonal to the free surface of the basin) is orthogonal to the longitudinal direction L and to the transverse direction T.

The further rows 21A are also arranged in succession along the transverse direction T. Thus, even in the further rows 21A one can identify an initial row 211A, a terminal row 212A, and a plurality of intermediate rows interposed between the initial row 211A and the terminal row 212A.

Preferably, the rows 21 and the further rows 21A are alternated along the transverse direction T. Thus, each row 21 (with the exception of the initial row 211 or of the terminal row 212) is next to two further rows 21A, and vice versa.

The apparatus includes, for each row 21, a frame 5. The frame 5 supports the panels 2 of the row 21 and, moreover, the panels 2 of a corresponding further row 21A.

The frame 5 is shaped like a tympanum and includes a first sloping 51 and a second sloping 52. The frame 5 includes a plurality of tie-rods 53. The frame includes a top beam 55, or, preferably, a pair of top beams 55. The apparatus 1 may include a cooling or a cleaning system supported by the top beams 55.

The first sloping 51 includes one or more elongated elements which extend between a first base 51A of the first sloping 51 and a first top 51B of the first sloping 51. Said one or more elongated elements of the first sloping 51 are inclined with respect to the free surface of basin 3 according to the first inclination and support the row 21 of panels 2.

The second sloping 52 includes one or more elongated elements which extend between a second base 52A of the second slope 52 and a second top 52B of the second slope 52. Said one or more elongated elements of the second slope 52 are inclined with respect to the free surface of the basin 3 according to the second inclination and support the further row 21A of panels 2.

The tie-rods 53 connect the first base 51A of the first slope 51 and the second base 52A of the second slope 52.

Each tie 53 is elongated, along the transverse direction T, between a first end 53A and a second end 53B. The first end 53A is connected to the first base 51A of the first sloping 51; the second end 53B is connected to the second base 52A of the second sloping 52.

The first summit 51B of the first slope 51 is connected to the second summit 52B of the second slope 52. The summit beams 55 are connected to the first summit 51B of the first slope 51 and to the second summit 52B of the second slope 52, respectively.

The frame 5 also includes a plurality of hooking elements 54, configured to fix the panels 2. The hooking elements 54 can include pliers or other gripping elements. The plurality of hooking elements 54 includes a group of summit hooking elements for hooking (an upper side of) the panels 2 to the top beam 55.

The apparatus 1 further includes a plurality of floating structures 4 (including at least three floating structures 4).

Each floating structure 4 includes at least one tubular floating element 41. The tubular floating element 41 is elongated along the longitudinal direction L. In the case (not shown) in which each floating structure 4 includes a plurality of floating elements 41, they are elongated along the longitudinal direction L and arranged in succession along said longitudinal direction L.

The floating structures 4 of said plurality of floating structures 4 are arranged in succession in the transverse direction. Thus, the plurality of floating structures 4 includes first initial floating structure 411, a terminal floating structure 412 and one or more floating intermediate structures, arranged between the initial floating structure 411 and the terminal floating structure 412 along the transverse direction T.

Each frame 5 is supported by a pair of adjacent floating structures 4. Thus, each floating structure 4 (with the exception of the initial floating structure 411 and the terminal floating structure 412) supports two adjacent frames 5.

Each floating structure 4 further includes a plurality of annular coupling elements 42. In the illustrated example, each floating structure 4 includes four annular coupling elements 42. The annular coupling elements 42 are spaced between them along the longitudinal direction L. The annular coupling elements 42 each surround a tubular floating element 41. Each annular coupling element 42 is also connected (on one side) to an elongated element of the first slope 51 of a first frame 5 and (on the other side) to an elongated element of the second slope 52 of a second frame 5, adjacent to the first one. Therefore, it is envisaged that there will be, for each elongated element of the first slope 51 of the frame 5, a corresponding annular coupling element 42 (to which an elongated element of the second slope 52 of an adjacent frame 5 may also be hooked).

Each annular coupling element 42 includes a first part (or upper part) 421 and a second part (or lower part) 422. The second part 422 is U-shaped. The first and second parts 421, 422 can be removably coupled: they are joined to close the annular coupling element 42 around the floating element 41. The annular coupling element 42 includes (in the first part 421) a coupling profile 42A. The coupling profile 42A is step-shaped. Moreover, the annular coupling element 42 includes (in the first part 421) a first 42B and a second 42C profile for hooking to the frame 5 (preferably, for a hinge connection, which allows a relative oscillation between the coupling element annular 42 and the frame 5). The first 42B and a second 42C profile for hooking to the frame are located on opposite sides of the annular coupling element 42, with respect to the coupling profile 42A. The first 42B and the second 42C profile for hooking to the frame are configured to connect to a respective elongated element of the first sloping 51 or of the second sloping 52 (alternatively, they could be connected to the tie 53).

The apparatus 1 further comprises, for each floating structure 4, a respective longitudinal member 6. The longitudinal member 6 is a rigid element of elongated shape, which extends parallel to the longitudinal direction L.

Thus, the apparatus 1 includes a plurality of longitudinal members 6 arranged in succession along the transverse dimension T. The plurality of longitudinal members 6 includes an initial longitudinal member 601, an end longitudinal member 602, and at least one intermediate longitudinal member 603 (interposed between the initial longitudinal member 601 and the end member 602).

The longitudinal member 6 is positioned above the respective floating structure 4, fixed to it to give it stiffness. In particular, the longitudinal member 6 is fixed to the coupling elements of annular shape 42, which wrap around the floating element 41. In fact, the longitudinal member 6 includes a concave area 6A shaped to accommodate and rigidly hold the coupling profile 42A of the coupling annular elements 42. Specifically, the longitudinal member 6 is shaped like an "omega beam".

The initial longitudinal member 601 is mounted on the initial floating structure 411. The end longitudinal member 602 is mounted on the terminal floating structure 412. Each of the intermediate longitudinal members 603 is mounted on a respective intermediate floating structure.

It should be noted that the plurality of coupling elements 54 includes a group of basal coupling elements for hooking (a lower side of) the panels 2 to the longitudinal member 6. Thus, besides the function of stiffening the structure, the longitudinal members 6 have that of supporting the panels 4.

It should be noted that the frame 5 defines, inside it, a free space, included between the tie-rods 53. The apparatus 1 can comprise a plurality of storage batteries 56, housed in this space. Furthermore, the apparatus 1 includes an inverter, which can be placed in this free space or on a dedicated raft.

The apparatus 1 can comprise a walkway 7, configured to allow an operator to access the panels 2 for maintenance. The walkway 7 can be mounted, preferably in a removable way, on a longitudinal member 6 (for example, by means of a suitable coupling profile of the gangway 7, in which the raised profile of the longitudinal member 6 is inserted). Preferably, the walkway 7 has an extension, along the longitudinal direction L, at least equal to that of the rows 21 of panels 2.

The apparatus 1 comprises a mooring structure 9. The mooring structure 9 comprises a plurality of mooring elements 91 (for example, ropes), for connecting the apparatus 1 to a bottom 31, or to a bank 32 of the basin 3. It is planned to connect the mooring elements 91 to the initial longitudinal member 601, and / or to the end longitudinal member 602, and / or to the ends of the intermediate longitudinal members 603. It should be noted that, in an embodiment, the mooring elements 91 are connected to the annular coupling elements 42 which surround the initial floating structure 411 and / or the terminal floating structure 412. The mooring structure 9 further comprises one or more mooring blocks 92 (for example, concrete blocks), positioned on the bottom 31 or on the bank 32 of the basin, for the coupling of the mooring elements 91.

## Claims

1. Apparatus (1) for generating electricity through photovoltaic panels (2), the apparatus (1) being placed in a water basin (3) and comprising:
- at least one floating structure (4);
- a plurality of photovoltaic panels (2), which are arranged in two or more rows (21), so that an upper face of the photovoltaic panels (2) receives a solar radiation, the rows (21) being oriented along a longitudinal direction (L);
- for each row (21) of photovoltaic panels (2), a respective frame (5), on which the photovoltaic panels (2) are mounted;
- a plurality of longitudinal members (6) including three or more longitudinal members (6), connected to said at least one floating structure (4) and elongated along the longitudinal direction (L), in which the longitudinal members (6) of the plurality of longitudinal members (6) are spaced apart in a transverse direction (T), perpendicular to said longitudinal direction (L), and in which the frame (5) of each row (21) of said plurality of rows (21) is connected to a corresponding pair of consecutive longitudinal members (6) of said plurality of longitudinal members (6).

2. Apparatus (1) according to claim 1, comprising a plurality of floating structures (4) elongated along the longitudinal direction (L), wherein each longitudinal member (6) of said plurality of longitudinal members (6) is connected to a respective floating structure (4) of the plurality of floating structures (4).

3. Apparatus (1) according to claim 2, wherein each floating structure (4) is positioned below the respective longitudinal member (6).

4. Apparatus (1) according to claim 3, wherein each floating structure (4) includes one or more tubular floating elements (41).

5. Apparatus (1) according to claim 3, wherein said one or more tubular floating elements (41) have a diameter of at least 0.25 m.

6. Apparatus (1) according to claim 4 or 5, wherein each floating structure (4) includes one or more annular hooking elements (42), which surround said one or more floating element (41) and have, in a respective top portion, a coupling profile (42A), to hook onto the corresponding longitudinal member (6).

7. Apparatus (1) according to claim 6, wherein each longitudinal member (6) of said plurality of longitudinal members (6) includes a concave area (6A), to receive in coupling the coupling profile (42A) of the corresponding plurality of coupling rings elements (42).

8. Apparatus (1) according to any one of the preceding claims, wherein said plurality of longitudinal members (6) includes at least one intermediate longitudinal member (603) to which are connected the frames (5) of a first and a second row (211, 212) of photovoltaic panels (2) adjacent to each other.

9. Apparatus (1) according to any one of the preceding claims, comprising a walkway (7) on which an operator can walk, connected to one more longitudinal members (6) of the plurality of longitudinal members (6).

10. Apparatus (1) according to claim 9, wherein the walkway (7) is interposed between a pair of rows (21) of adjacent photovoltaic panels (2) and permanently hooked to a longitudinal member (6) of said plurality of longitudinal members (6).

11. Apparatus (1) according to any one of the preceding claims, comprising a maintenance trolley (8), on which an operator can stand, in which each longitudinal member (6) of said plurality of longitudinal members (6) defines a track to allow sliding of the maintenance trolley (8) along the longitudinal direction (L).

12. Apparatus (1) according to any one of the preceding claims, in which the frame (5) of each row (21) of photovoltaic panels (2) is movably connected to the corresponding pair of consecutive spars (6), to allow oscillation of the frame (5), with respect to each longitudinal member (6) of said pair, around at least one respective axis oriented along the longitudinal direction (L).

13. Apparatus (1) according to any one of the preceding claims, in which each frame (5) is shaped like a tympanum and includes a first slope (51), on which a respective row (21) of said plurality of rows (21) of photovoltaic panels (2) is mounted, a second slope (52) and a tie (53), in which the first slope (51) has a first inclination with respect to the free surface of the basin and includes a first base (51A) connected to a first longitudinal member (6) of said pair of longitudinal members (6), the second slope (52) has a second inclination with respect to the free surface of the basin, different from the first inclination, and includes a second base (52A) connected to a second longitudinal member (6) of said pair of longitudinal members (6).

14. Apparatus (1) according to any one of the preceding claims, comprising a mooring structure (9), including a plurality of mooring elements (91) connected to an initial longitudinal member (601) or to a final longitudinal member (603) of said plurality of longitudinal members (6) and can be anchored to a bottom and / or to a bank of the basin.

15. Method for making an apparatus (1) for generating electricity using photovoltaic panels (2), the apparatus (1) being able to be placed in a water basin and the method comprising the following steps:
- arrangement of at least one floating structure (4);
- provision of a plurality of longitudinal members (6), including three or more longitudinal members (6), and connection of the longitudinal members (6) of said plurality of longitudinal members (6) to at least one said floating structure (4), in which the longitudinal members (6) of said plurality of longitudinal members (6) are arranged oriented along a longitudinal direction (6) and spaced between them along a transverse direction (T), perpendicular to said longitudinal direction (L);
- provision of a plurality of frames (5) and connection of each frame (5) to a corresponding pair of longitudinal members (6) of said plurality of longitudinal members (6);
- arrangement of a plurality of photovoltaic panels (2) and assembly of said plurality of photovoltaic panels (2) according to a plurality of rows (21) oriented along the longitudinal direction (4), in which the photovoltaic panels (2) of each row (21) of said plurality of rows (21) are mounted on a respective frame (5) of said plurality of frames (5).

16. Method according to claim 15, comprising a phase for preparing a plurality of floating structures (4), each of which is elongated along the longitudinal direction (L) and is fixed to a respective longitudinal member (6) of the plurality of longitudinal members (6).
| | |
|---|---|
| 1 | apparatus |
| 2 | photovoltaic panels |
| 21 | Row |
| 211 | Initial row |
| 212 | Terminal row |
| 21A | Additional rows |
| 211A | Additional startinq row |
| 212A | Additional terminal row |
| 3 | Water basin |
| 31 | Bottom of the basin |
| 32 | Side of the basin |
| 4 | Floating structure |
| 41 | Floating element |
| 411 | Initial floating element |
| 412 | Terminal float element |
| 42 | Ring-shaped coupling element |
| 421 | First part |
| 422 | Second part (removable) |
| 42A | Coupling profile (with lonqitudinal member) |
| 42B | Frame hooking profiles |
| L | Longitudinal direction |
| T | Transverse direction |
| V | Vertical direction |
| 5 | Frame |
| 51 | First sloping |
| 51A | First base of the first slope |
| 51B | First summit of the first slope |
| 52 | Second sloping |
| 52A | Second base of the second slope |
| 52 B | Second top of the second slope |
| 53 | guy |
| 53A | First end of the tie rod |
| 53B | Second end of the tie rod |
| 54 | Panel fasteners |
| 55 | Summit beams |
| 56 | Batteries |
| 6 | Spars |
| 6A | Concave area |
| 601 | Initial side member |
| 603 | Intermediate side member |
| 602 | Terminal rail |
| 7 | Walkway |
| 9 | Moorinq structure |
| 91 | Mooring elements |
| 92 | Mooring blocks |
